(19) Europäisches Patentamt
European Patent Office
Office européen des brevets

(11) **EP 4 484 235 A1**

(12) **EUROPEAN PATENT APPLICATION**

(43) Date of publication:
**01.01.2025 Bulletin 2025/01**

(21) Application number: **23213254.8**

(22) Date of filing: **30.11.2023**

(51) International Patent Classification (IPC):
**B60W 30/06** (2006.01)    **B60W 30/08** (2012.01)
**B60W 30/09** (2012.01)    **B60W 60/00** (2020.01)
**B62D 15/02** (2006.01)    **G08G 1/16** (2006.01)

(52) Cooperative Patent Classification (CPC):
**G08G 1/166; B60W 30/06; B60W 30/09;**
**B60W 30/0956; B60W 30/143; B62D 15/0285;**
B60W 2554/4029; B60W 2554/4041;
B60W 2554/4042; B60W 2554/4043;
B60W 2554/801; B60W 2556/35; B60W 2720/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.06.2023 CN 202310764781**

(71) Applicant: **Chongqing Changan Automobile Co., Ltd.**
**Chongqing 400023 (CN)**

(72) Inventors:
• **Ding, Minghui**
**Chongqing 400023 (CN)**
• **Liang, Fenghua**
**Chongqing 400023 (CN)**

(74) Representative: **Patentanwaltskanzlei**
**Matschnig & Forsthuber OG**
**Biberstraße 22**
**Postfach 36**
**1010 Wien (AT)**

(54) **VEHICLE DRIVING CONTROL METHOD, APPARATUS, AND DEVICE, AND STORAGE MEDIUM**

(57) A vehicle running control method, apparatus, and device, and a storage medium are provided. The method includes: performing target fusion and drivable region fusion on a sensor signal on a target vehicle to obtain pedestrian target information and a drivable region signal respectively; performing target cognition and environmental cognition on the target vehicle based on a pedestrian target complete collision avoidance data table and the pedestrian target information, to obtain a dangerous pedestrian signal and a dangerous region signal; and performing longitudinal running speed planning and/or lateral running distance planning on the target vehicle based on the dangerous pedestrian signal, the dangerous region signal, and the drivable region signal, to avoid contact between the target vehicle and a pedestrian target after planning. In the present application, for a pedestrian target outside a vehicle, a control strategy of longitudinal running speed planning and/or lateral running distance planning is used for the vehicle, so that a possibility of contact between the vehicle and the pedestrian is reduced, and the pedestrian target outside is recognized and protected in a running process of the vehicle.

Fig. 2

## Description

### Field of the Invention

The present application relates to the field of intelligent driving technologies of vehicles, and in particular, to a vehicle running control method, apparatus, and device, and a storage medium.

### Background of the Invention

An automatic parking assist (APA for short) system uses a multi-sensor (an ultrasonic sensor, a millimeter-wave sensor, a camera, a laser radar, and another sensor) fusion detection technology to implement L4 driverless functions in a limited region, for example, last-kilometer valet parking, remote valet parking, remote moving, and one-click summoning. The APA system is used on a non-public road of a surface or underground parking lot, and a working speed range of the APA system is 0 to 15 km/h. The APA system is of L4, that is, there is no driver in a vehicle and remote supervision by a user is not required. Therefore, an "observation" capability of the APA system in a working process completely depends on detection of a sensor. In a parking lot environment, a stationary obstacle (vehicle) density is high, ambient light is poor, and pedestrians frequently park and pick up vehicles. As a result, in this scene, an accident rate of colliding pedestrians outside vehicles is extremely high, and it is hard to effectively ensure life safety of pedestrians outside vehicles.

The first international technical standard ISO22737 for specific L4 automated driving systems mainly makes regulations for low-speed automated driving (LSAD) along predefined routes under 32 km/h. It is clearly pointed out that pedestrians outside vehicles need to be detected and protected and the automated driving systems need to stop the vehicles before collision with the pedestrians. However, an existing solution obtained based on this technical standard has the following shortcomings.

1. Some current processing solutions for pedestrians outside vehicles in intelligent driving are lot-side intelligent vehicle to everything (V2X) solutions, that is, a vehicle implements danger analysis for a pedestrian outside the vehicle based on real-time information with the outside world (a parking lot side, another vehicle around, or the like). In a V2X method, auxiliary devices need to be mounted at the parking lot side, the vehicle side, another vehicle side, and the like, to detect information of a location, a speed, and the like of the pedestrian, and communication effectiveness of the vehicle needs to be ensured in an information exchange stage. However, at present, vehicle-side network signals of most parking lots are unlikely to implement 100% effective coverage. Therefore, this solution has high requirements on the parking lot side and the vehicle side, and adaptability to a parking scene is significantly limited.

2. There is no systematic processing strategy for pedestrians outside vehicles in the existing solution, and consequently, pedestrians outside vehicles cannot be completely avoided from collisions in some extreme scenes (a pedestrian suddenly appears in a dead zone).

3. A coping strategy used by the vehicle for pedestrians outside vehicles in the existing solution is simple, and cannot cover pedestrians in different scenes, at different locations and in different motion states, and mistaken braking and missing braking for pedestrians outside vehicles easily occur.

4. In most existing solutions, a pedestrian target is controlled based on a motion speed of the pedestrian. A pedestrian target outside a vehicle is unlike a vehicle target, the pedestrian is a high-mobility target, and pedestrian speed measurement accuracy of a vision sensor, a millimeter-wave sensor, and the like is poor. In addition, a speed of the pedestrian changes greatly after observing an environment (the pedestrian has strong observation and thinking abilities). As a result, it is hard to accurately predict the pedestrian. Therefore, controlling a vehicle mainly based on a motion speed of a pedestrian easily causes mistaken braking or missing braking of the vehicle.

### Summary of the Invention

In view of the foregoing shortcomings of the prior art, the present application provides a vehicle running control method, apparatus, and device, and a storage medium, to solve the foregoing technical problems.

The present application provides a vehicle running control method, including the following steps:

performing target fusion on a sensor signal on a target vehicle to obtain pedestrian target information in an external space region of the target vehicle, the target vehicle including a current vehicle, and the pedestrian target information including a pedestrian target and pedestrian target attribute information;

performing target cognition and environmental cognition on the target vehicle based on a predetermined pedestrian target complete collision avoidance data table and the pedestrian target information, to obtain a dangerous pedestrian signal and a dangerous region signal;

performing hidden pedestrian fusion on the sensor signal on the target vehicle to obtain a hidden pedestrian fusion result, and performing drivable region fusion on the sensor signal on the target vehicle to obtain a drivable region signal; and

performing longitudinal running speed planning on the target vehicle based on a pre-generated parking scene danger level recognition result, the hidden pedestrian fusion result, the dangerous pedestrian signal, the dangerous region signal, and the drivable region signal, and/or performing lateral running distance planning on the target vehicle based on the dangerous pedestrian signal, the dangerous region signal, and the drivable region signal, to avoid contact between the target vehicle and the pedestrian target after planning.

In an embodiment of the present application, a process of performing target cognition and environmental cognition on the target vehicle based on a predetermined pedestrian target complete collision avoidance data table and the pedestrian target information, to obtain a dangerous pedestrian signal and a dangerous region signal includes:

determining, based on the predetermined pedestrian target complete collision avoidance data table, a maximum longitudinal distance of the target vehicle that completely avoids a front bumper and a rear bumper of the target vehicle from collision with the pedestrian target when a current longitudinal running speed is not reduced, and determining the maximum longitudinal distance as a dangerous region length;

determining, based on the current longitudinal running speed of the target vehicle and a vehicle width of the target vehicle, a minimum of a corresponding dangerous region width when the dangerous region length is not null, and determining the minimum of the dangerous region width as a dangerous region width in a current cycle;

combining the dangerous region length and the dangerous region width in the current cycle to generate a rectangular region, and generating the dangerous region signal by taking the rectangular region as a dangerous region of the target vehicle;

determining a risky region of the target vehicle based on the dangerous region of the target vehicle and a running environment of the target vehicle, the running environment of the target vehicle including a maximum longitudinal running speed of the target vehicle; and

generating the dangerous pedestrian signal based on a motion state of the pedestrian target and whether a location of the pedestrian target is in the dangerous region or the risky region.

In an embodiment of the present application, a process of performing longitudinal running speed planning on the target vehicle includes:

receiving the dangerous pedestrian signal, determining, based on the dangerous pedestrian signal, whether there is a dangerous pedestrian target, and if there is the pedestrian target in the dangerous region or the risky region, determining that there is the dangerous pedestrian target, or if there is no pedestrian target in the dangerous region and the risky region, determining that there is no dangerous pedestrian target; and

when there is no dangerous pedestrian target, determining a first preset vehicle speed as a longitudinal running speed of the target vehicle; or

when there is the dangerous pedestrian target, determining whether the pedestrian target is in the dangerous region; and

if the pedestrian target is in the dangerous region and the pedestrian target is in a stationary state, controlling the target vehicle to remain the current longitudinal running speed; or

if the pedestrian target is in the dangerous region and the pedestrian target is in the motion state, determining, based on the motion state of the pedestrian target and the current longitudinal running speed of the target vehicle, whether a first ratio is greater than a second ratio, and if the first ratio is greater than the second ratio, controlling the target vehicle to remain the current longitudinal running speed, or if the first ratio is less than or equal to the second ratio, planning a longitudinal running speed of the target vehicle based on low-speed emergency braking.

The first ratio is a ratio of a lateral distance of the pedestrian target to a motion speed of the pedestrian target. The second ratio is a ratio of a longitudinal distance of the pedestrian target to the current longitudinal running speed of the target vehicle.

In an embodiment of the present application, the process of performing longitudinal running speed planning on the target vehicle further includes:

if the pedestrian target is in the risky region and the pedestrian target is in the stationary state, determining whether there is a trajectory overlap between the target vehicle and the pedestrian target, and if there is no trajectory overlap between the target vehicle and the pedestrian target, controlling the target vehicle to run based on a second preset vehicle speed, or if there is the trajectory overlap between the target vehicle and the pedestrian target, controlling the longitudinal running speed of the target vehicle based on a distance between the pedestrian target and the target vehicle; or

if the pedestrian target is in the risky region and the pedestrian target is in the motion state, determining, based on the motion state of the pedestrian target, whether the pedestrian target moves longitudinally, and if the pedestrian target moves longitudinally, determining whether there is a trajectory overlap between the target vehicle and the pedestrian target, and controlling the longitudinal running speed of the target vehicle based on a trajectory overlap determining result, or if the pedestrian target moves laterally, controlling the longitudinal running speed of the target vehicle based on a distance between the pedestrian target and the target vehicle.

In an embodiment of the present application, the process of performing longitudinal running speed planning on the target vehicle further includes:

combining the dangerous region and the risky region of the target vehicle as an unsafe region of the target vehicle, and determining a space region other than the unsafe region in the external space region of the target vehicle as a safe region of the target vehicle;

obtaining a longitudinal running speed of the target vehicle relative to each pedestrian target in the unsafe region, denoted as an expected longitudinal running speed corresponding to each pedestrian target;

superimposing the expected longitudinal running speed corresponding to each pedestrian target, and taking a minimum to obtain a final expected longitudinal running speed corresponding to all dangerous pedestrian targets in the unsafe region as a current pedestrian target-based planned longitudinal running speed of the target vehicle, denoted as a first planned longitudinal running speed; and

combining the first planned longitudinal running speed, a third planned longitudinal running speed, and a hidden pedestrian longitudinal speed to obtain a longitudinal running speed of the target vehicle when there is the pedestrian target in the unsafe region, and determining the longitudinal running speed as a final result of running speed adjustment performed on the target vehicle, the hidden pedestrian fusion result including the hidden pedestrian longitudinal speed, and the third planned longitudinal running speed being obtained based on the running environment of the target vehicle.

In an embodiment of the present application, a process of obtaining the third planned longitudinal running speed includes:

based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum;

comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum;

obtaining, based on the target vehicle lateral distance minimum and the pedestrian target complete collision avoidance data table, a maximum longitudinal running speed of the target vehicle in a current running environment as a second planned longitudinal running speed;

calculating, based on the second planned longitudinal running speed, a parking scene danger degree coefficient, and a parking scene danger degree correction vehicle speed, a maximum vehicle speed supported by a current scene, the pre-generated parking scene danger level recognition result including the parking scene danger degree coefficient and the parking scene danger degree correction vehicle speed; and

comparing the maximum vehicle speed supported by the current scene with a third preset vehicle speed, and determining the larger of the maximum vehicle speed supported by the current scene and the third preset vehicle speed as the third planned longitudinal running speed.

In an embodiment of the present application, a process of calculating the parking scene danger degree coefficient includes:

$$W = \frac{W_t \times W_p \times W_d}{27} \times 100\%$$

.

In the formula, W indicates the parking scene danger degree coefficient, and ranges from 0 to 100%; Wt indicates danger degrees at different moments of a day; $W_p$ indicates a parking lot busy-time danger degree; and $W_d$ indicates a holiday danger degree.

In an embodiment of the present application, a process of performing lateral running distance planning based on the dangerous pedestrian signal, the dangerous region signal, and the drivable region signal includes:

based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum;

comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum;

calculating a difference between the first width minimum and the second width minimum, denoted as a first difference, and determining whether an absolute value of the first difference is greater than or equal to a first preset value; and

if the absolute value is less than the first preset value, determining that there is no deviation space for the target vehicle at a current moment, and skipping performing lateral running distance adjustment on the target vehicle; or

if the absolute value is greater than or equal to the first preset value, determining that there is a deviation space for the target vehicle at a current moment, and determining whether the target vehicle lateral distance minimum is less than or equal to a second preset value; and if the target vehicle lateral distance minimum is greater than the second preset value, determining that there is no deviation requirement at the current moment, and skipping performing lateral running distance adjustment on the target vehicle, or if the target vehicle lateral distance minimum is less than or equal to the second preset value, determining that there is a deviation requirement at the current moment, receiving the dangerous pedestrian signal, and determining, based on the dangerous pedestrian signal, whether there is a dangerous pedestrian target; and if there is the pedestrian target in the dangerous region or the risky region, determining that there is the dangerous pedestrian target, and skipping performing lateral running distance adjustment on the target vehicle, or if there is no pedestrian target in the dangerous region and the risky region, determining that there is no dangerous pedestrian target, and performing lateral running distance adjustment on the target vehicle.

In an embodiment of the present application, if there is no pedestrian target in the dangerous region and the risky region, a process of performing lateral running distance adjustment on the target vehicle includes:

calculating a difference between the preset optimal lateral distance and the target vehicle lateral distance minimum, denoted as a second difference;

determining whether twice of the second difference is less than or equal to the absolute value of the first difference, and if twice of the second difference is less than or equal to the absolute value of the first difference, determining the second difference as a lateral deviation distance of the target vehicle, or if twice of the second difference is greater than the absolute value of the first difference, determining a half of the absolute value of the first difference as a lateral deviation distance of the target vehicle; and

determining whether the second difference is greater than or equal to zero, and if the second difference is greater than or equal to zero, controlling the target vehicle to deviate leftwards based on the corresponding lateral deviation distance, or if the second difference is less than zero, controlling the target vehicle to deviate rightwards based on the corresponding lateral deviation distance.

In an embodiment of the present application, a process of performing lateral running distance planning based on the dangerous pedestrian signal, the dangerous region signal, and the drivable region signal includes:

based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum;

comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum;

determining whether the target vehicle lateral distance minimum is greater than the dangerous region width; and

if the target vehicle lateral distance minimum is greater than the dangerous region width, determining that there is no real-time pedestrian target collision risk; or

if the target vehicle lateral distance minimum is less than or equal to the dangerous region width, determining that there is a real-time pedestrian target collision risk.

The present application further provides a vehicle running control apparatus. The apparatus includes:

a target fusion module, configured to perform target fusion on a sensor signal on a target vehicle to obtain pedestrian target information in an external space region of the target vehicle, the target vehicle including a current vehicle, and the pedestrian target information including a pedestrian target and pedestrian target attribute information;

a target cognition and environmental cognition module, configured to perform target cognition and environmental cognition on the target vehicle based on a predetermined pedestrian target complete collision avoidance data table and the pedestrian target information, to obtain a dangerous pedestrian signal and a dangerous region signal;

a hidden pedestrian fusion module, configured to perform hidden pedestrian fusion on the sensor signal on the target vehicle to obtain a hidden pedestrian fusion result;

a drivable region fusion module, configured to perform drivable region fusion on the sensor signal on the target vehicle to obtain a drivable region signal; and

a vehicle running planning control module, configured to perform longitudinal running speed planning on the target vehicle based on a pre-generated parking scene danger level recognition result, the hidden pedestrian fusion result, the dangerous pedestrian signal, the dangerous region signal, and the drivable region signal, and/or perform lateral running distance planning on the target vehicle based on the dangerous pedestrian signal, the dangerous region signal, and the drivable region signal, to avoid contact between the target vehicle and the pedestrian target after planning.

The present application further provides a vehicle running control device. The device includes:

one or more processors; and

a storage apparatus, configured to store one or more programs, where when the one or more programs are executed by the one or more processors, the device is enabled to implement any foregoing vehicle running control method.

The present application further provides a computer-readable storage medium. A computer program is stored on the computer-readable storage medium. When the computer program is executed by a processor of a computer, the computer is enabled to perform any foregoing vehicle running control method.

As described above, the vehicle running control method, apparatus, and device, and the storage medium provided in the present application has the following beneficial effects. In the present application, target fusion is performed on the sensor signal on the target vehicle to obtain the pedestrian target information in the external space region of the target vehicle, hidden pedestrian fusion is performed on the sensor signal on the target vehicle to obtain the hidden pedestrian fusion result. Drivable region fusion is performed on the sensor signal on the target vehicle to obtain the drivable region signal. In addition, target cognition and environmental cognition are performed on the target vehicle based on the predetermined pedestrian target complete collision avoidance data table and the pedestrian target information, to obtain the dangerous pedestrian signal and the dangerous region signal. Finally, longitudinal running speed planning is performed on the target vehicle based on the pre-generated parking scene danger level recognition result, the hidden pedestrian fusion result, the dangerous pedestrian signal, the dangerous region signal, and the drivable region signal, and/or lateral running distance planning is performed on the target vehicle based on the dangerous pedestrian signal, the dangerous region signal, and the drivable region signal, to avoid contact between the target vehicle and the pedestrian target after planning. The target vehicle includes the current vehicle. The pedestrian target information includes the pedestrian target and the pedestrian target attribute information. Thus it can be learned that in the present application, a running environment and pedestrian information outside a vehicle are sensed based on an existing sensor (for example, a front radar, a front camera, a 360-degree view camera, an ultrasonic sensor, or another sensor) of the vehicle by using a multi-sensor fusion method. Therefore, a location of a pedestrian target in an external space region of the vehicle can be determined based on a motion feature of the pedestrian target. In addition, in the present application, for pedestrian targets in different space regions, a control strategy of longitudinal running speed planning and/or lateral running distance planning is used for the vehicle, so that a possibility of contact between the vehicle and the pedestrian is reduced, and the pedestrian target outside is recognized and protected in a running process of the vehicle. To be specific, in the present application, a risk of collision between the vehicle and the pedestrian can be evaluated from aspects of the running environment, the pedestrian target, and the like, to further adjust a running status of the vehicle, thereby completing speed planning of the vehicle for avoiding collision with the pedestrian.

It should be understood that the foregoing general descriptions and the following detailed descriptions are merely exemplary and explanative, and do not constitute any limitation on the present application.

**Brief Description of the Drawings**

The accompanying drawings, which are incorporated in and constitute a part of this specification, illustrate embodiments consistent with the present application and, together with the specification, serve to explain the principle of the present application. Clearly, the accompanying drawings in the following description merely show some embodiments of the present application, and a person of ordinary skill in the art can derive other accompanying drawings from these accompanying drawings without creative efforts. In the drawings:

Fig. 1 is a schematic diagram of an exemplary system architecture to which technical solutions in one or more embodiments of the present application are applied;

Fig. 2 is a logical schematic diagram of a vehicle running control method according to an embodiment of the present application;

Fig. 3 is a schematic diagram of dividing an external space region of a vehicle according to an embodiment of the present application;

Fig. 4 is a schematic flowchart of target cognition and environmental cognition according to an embodiment of the present application;

Fig. 5 is a schematic flowchart of planning a longitudinal running speed of a vehicle according to an embodiment of the present application;

Fig. 6 is a schematic flowchart of planning a lateral running distance of a vehicle according to an embodiment of the present application; and

Fig. 7 is a schematic diagram of a hardware structure of a vehicle running control device suitable for one or more embodiments of the present application.

Description of parameters in the accompanying drawings:

| Sign of the parameter | Physical meaning of the parameter | Unit of the parameter |
|---|---|---|
| LS | Dangerous region length | Meter |
| ZS | Dangerous region width | Meter |
| V | Longitudinal running speed of a vehicle | km/h |
| Vp | Target pedestrian speed, which is 5 km/h in the present disclosure | km/h |
| ZV | Ego-vehicle width, which is 1 m in the present disclosure | Meter |
| Lstop | Stop distance of the vehicle | Meter |
| L1 | Stop longitudinal distance of the vehicle | Meter |
| $\Delta$ | Lateral deviation of the vehicle | Meter |
| P1 | Lateral distance of a pedestrian target | Meter |
| P2 | Longitudinal distance of the pedestrian target | Meter |
| V1n | Current pedestrian target-based planned running speed of the vehicle | km/h |
| V1 | Final expected running speed V1 based on all dangerous pedestrian targets | km/h |
| V2 | Environment-based planned longitudinal running speed of the vehicle | km/h |
| V3 | Maximum running speed supported by a scene | km/h |
| V4 | Hidden pedestrian longitudinal speed | km/h |
| Z1 | Width minimum with an obstacle on a left side in a longitudinal range of a drivable region | Meter |
| Z2 | Width minimum with an obstacle on a right side in the longitudinal range of the drivable region | Meter |
| Zmin | Lateral distance minimum between a vehicle and the obstacles on both sides in a dangerous region | Meter |
| Vs | Longitudinal running speed planned at a current moment | km/h |
| Vx | Parking scene danger degree correction vehicle speed | km/h |

## Detailed Description of the Embodiments

The following describes implementations of the present application with reference to the accompanying drawings and preferred embodiments. A person skilled in the art may easily learn other advantages and effects of the present application based on content disclosed in this specification. The present application may further be implemented or applied with other different specific implementations. Various modifications or variations may further be made to details in this specification based on different points of view and applications without departing from the spirit of the present application. It should be understood that preferred embodiments are merely intended to illustrate the present application but not to limit the protection scope of the present application.
It should be noted that the drawings provided in the following embodiments merely schematically describe the basic concept of the present application. Therefore, the drawings show only components related to the present application, but are not drawn based on the number, a shape, and a size of a component during actual implementation.

During actual implementation, a form, the number, and a scale of each component can change freely, and a layout form of the component may also be more complex.

The term "and/or" mentioned in the present application describes an association relationship between associated objects and represents that three relationships may exist. For example, A and/or B may represent the following three cases: only A exists, both A and B exist, and only B exists. The character "/" generally indicates an "or" relationship between the associated objects.

"A plurality of" involved in the embodiments of the present application means two or more.

The terms "first", "second", and the like in the description of the present application are merely used for the purpose of description, and cannot be understood as indicating or implying relative importance, or cannot be understood as indicating or implying a sequence.

In addition, in the embodiments of the present application, the term "for example" is used to represent giving an example, an illustration, or a description. Any embodiment or implementation solution described as "for example" in the present application should not be construed as being preferred or having more advantages than another embodiment or implementation solution. Exactly, use of the word "for example" is intended to present a concept in a specific manner.

Plenty of details are discussed in the following description, to provide more thorough explanations about the embodiments of the present application. However, it is clear that a person skilled in the art can implement the embodiments of the present application without these specific details. In another embodiment, a known structure and equipment are shown in a form of a block diagram rather than details, to make the embodiments of the present application easy to understand.

Low-speed emergency braking means that a driver can quickly and correctly use a brake in an emergency in a running process of a vehicle, to stop the vehicle within a shortest distance.

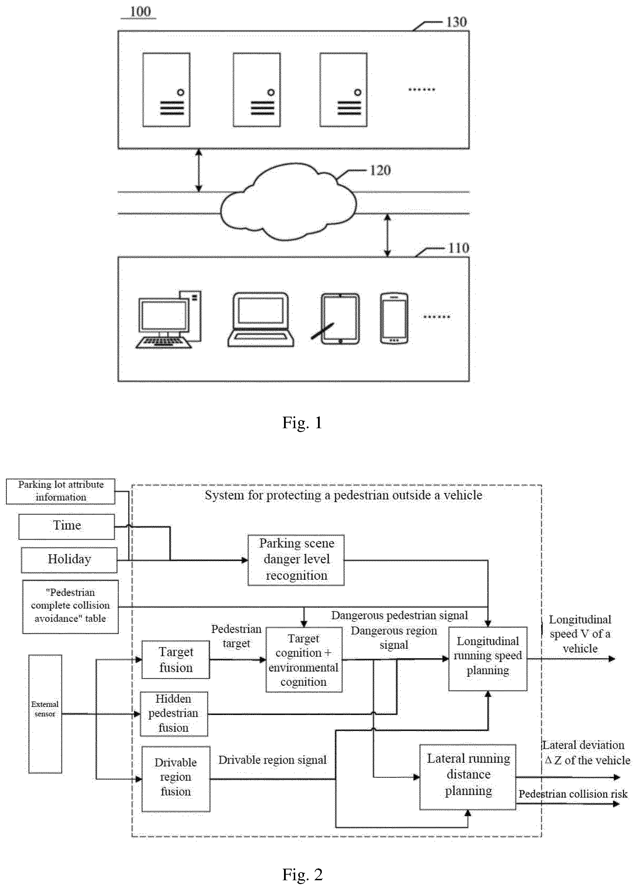

Fig. 1 is a schematic diagram of an exemplary system architecture to which technical solutions in one or more embodiments of the present application may be applied. As shown in Fig. 1, a system architecture 100 may include a terminal device 110, a network 120, and a server 130. The terminal device 110 may include various electronic devices such as a smart phone, a tablet computer, a notebook computer, and a desktop computer. The server 130 may be an independent physical server, a server cluster or distributed system including a plurality of physical servers, or a cloud server providing a cloud computing service. The network 120 may be a communication medium capable of providing various connection types of a communication link between the terminal device 110 and the server 130, for example, a wired communication link or a wireless communication link.

The system architecture in the embodiments of the present application may include any number of terminal devices, networks, and servers as required for implementation. For example, the server 130 may be a server group including a plurality of server devices. In addition, the technical solution provided in the embodiments of the present application may be applied to the terminal device 110 or the server 130, or may be implemented by the terminal device 110 and the server 130 together. This is not specially limited in the present application.

In an embodiment of the present application, the terminal device 110 or the server 130 in the present application may perform target fusion on a sensor signal on a target vehicle to obtain pedestrian target information in an external space region of the target vehicle, perform hidden pedestrian fusion on the sensor signal on the target vehicle to obtain a hidden pedestrian fusion result, and perform drivable region fusion on the sensor signal on the target vehicle to obtain a drivable region signal. In addition, target cognition and environmental cognition are performed on the target vehicle based on a predetermined pedestrian target complete collision avoidance data table and the pedestrian target information, to obtain a dangerous pedestrian signal and a dangerous region signal. Finally, longitudinal running speed planning is performed on the target vehicle based on a pre-generated parking scene danger level recognition result, the hidden pedestrian fusion result, the dangerous pedestrian signal, the dangerous region signal, and the drivable region signal, and/or lateral running distance planning is performed on the target vehicle based on the dangerous pedestrian signal, the dangerous region signal, and the drivable region signal, to avoid contact between the target vehicle and a pedestrian target after planning. The target vehicle includes a current vehicle. The pedestrian target information includes the pedestrian target and pedestrian target attribute information. When a running vehicle control method is performed by the terminal device 110 or the server 130, a running environment and pedestrian information outside a vehicle may be sensed based on an existing sensor (for example, a front radar, a front camera, a 360-degree view camera, an ultrasonic sensor, or another sensor) of the vehicle by using a multi-sensor fusion method. Therefore, a location of a pedestrian target in an external space region of the vehicle can be determined based on a motion feature of the pedestrian target. In addition, for pedestrian targets in different space regions, a control strategy of longitudinal running speed planning and/or lateral running distance planning is used for the vehicle, so that a possibility of contact between the vehicle and the pedestrian is reduced, and the pedestrian target outside is recognized and protected in a running process of the vehicle. To be specific, when the running vehicle control method is performed by the terminal device 110 or the server 130, a risk of collision between the vehicle and the pedestrian can be evaluated from aspects of the running environment, the pedestrian target, and the like, to further adjust a running status of the vehicle, thereby completing speed planning of the vehicle for avoiding collision with the pedestrian.

The foregoing describes content of the exemplary system architecture to which the technical solution of the present application is applied. The following continues to describe the vehicle running control method of the present application.

Fig. 2 is a logical schematic diagram of a vehicle running control method according to an embodiment of the present application. Specifically, in an exemplary embodiment, as shown in Fig. 2, this embodiment provides a vehicle running control method. The method includes the following steps.

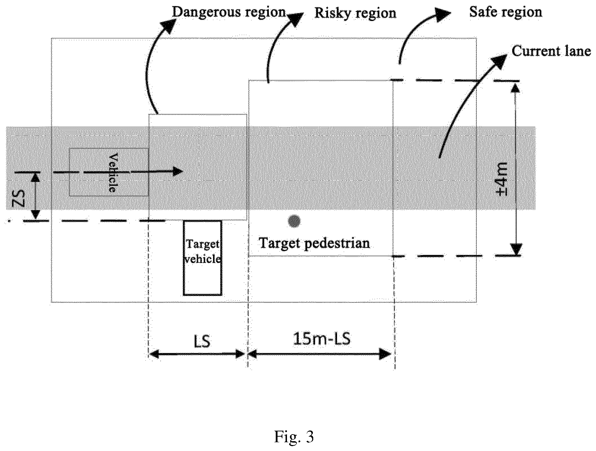

Target fusion is performed on a sensor signal on a target vehicle to obtain pedestrian target information in an external space region of the target vehicle. The target vehicle includes a current vehicle. The pedestrian target information includes a pedestrian target and pedestrian target attribute information. In some embodiments, the current vehicle may also be referred to as a vehicle. The pedestrian target attribute information includes a pedestrian target ID, a pedestrian target type, a pedestrian target lateral/longitudinal distance, a pedestrian target lateral/longitudinal relative speed, a pedestrian target location, and other information. As an example, in this embodiment, an external space region in an ego-vehicle running direction may be divided into a dangerous region, a risky region, and a safe region. The ego-vehicle running direction includes an ego-vehicle forward running direction and an ego-vehicle backward running direction. An unsafe region includes the dangerous region and the risky region. Specifically, as shown in Fig. 3, in this embodiment, the dangerous region may be set to a rectangular region before an outer contour of the vehicle in the ego-vehicle running direction. A lateral distance of the rectangular region is $\pm ZS$ meters, and a longitudinal distance is LS meters. The risky region may be set to a rectangular region outside the dangerous region in the ego-vehicle running direction. Generally, a longitudinal running speed upper limit in a parking lot is 15 km/h. Therefore, the lateral distance of the rectangular region is designed to $\pm 4$ meters, and a longitudinal distance is designed to 15-LS meters. The safe region may be a space region around the vehicle except the dangerous region and the risky region.

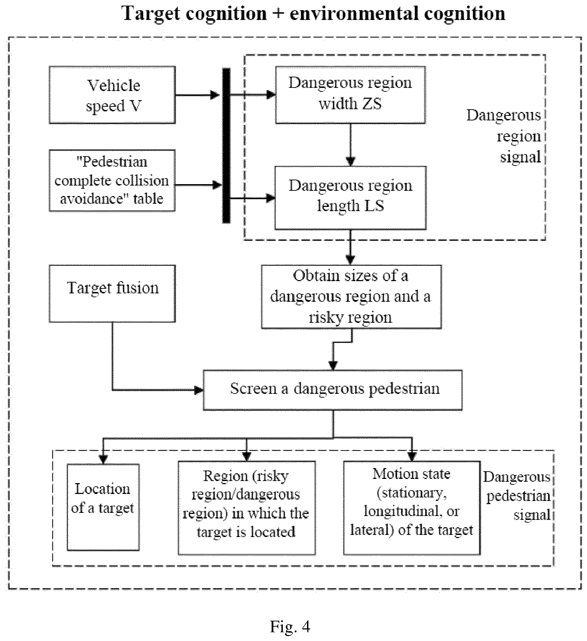

Target cognition and environmental cognition are performed on the target vehicle based on a predetermined pedestrian target complete collision avoidance data table and the pedestrian target information, to obtain a dangerous pedestrian signal and a dangerous region signal. The pedestrian target outside the vehicle is unlike the vehicle target, the pedestrian is a high-mobility target, and pedestrian speed measurement accuracy of a vision sensor, a millimeter-wave sensor, and the like is poor. In addition, a speed of the pedestrian changes greatly after observing an environment. As a result, it is hard to accurately predict the pedestrian. Therefore, in this embodiment, a running environment and pedestrian information outside the vehicle may be sensed based on an existing sensor (a front radar, a front camera, a 360-degree view camera, an ultrasonic sensor, or another sensor) of the vehicle by using a multi-sensor fusion method. Therefore, a location of the pedestrian target in the external space region of the vehicle can be determined based on a motion feature of the pedestrian target, to determine whether there is the pedestrian target in the unsafe region of the vehicle. As shown in Fig. 4, in this embodiment, a process of performing target cognition and environmental cognition on the target vehicle based on a predetermined pedestrian target complete collision avoidance data table and the pedestrian target information, to obtain a dangerous pedestrian signal and a dangerous region signal includes: determining, based on the predetermined pedestrian target complete collision avoidance data table, a maximum longitudinal distance of the target vehicle that completely avoids a front bumper and a rear bumper of the target vehicle from collision with the pedestrian target when a current longitudinal running speed is not reduced, and determining the maximum longitudinal distance as a dangerous region length; determining, based on the current longitudinal running speed of the target vehicle and a vehicle width of the target vehicle, a minimum of a corresponding dangerous region width when the dangerous region length is not null, and determining the minimum of the dangerous region width as a dangerous region width in a current cycle; combining the dangerous region length and the dangerous region width in the current cycle to generate a rectangular region, and generating the dangerous region signal by taking the rectangular region as a dangerous region of the target vehicle; determining a risky region of the target vehicle based on the dangerous region of the target vehicle and a running environment of the target vehicle, the running environment of the target vehicle including a maximum longitudinal running speed of the target vehicle; and generating the dangerous pedestrian signal based on a motion state of the pedestrian target and whether a location of the pedestrian target is in the dangerous region or the risky region. To be specific, when target cognition and environmental cognition are performed on the target vehicle, an input signal is the longitudinal running speed V, the pedestrian target complete collision avoidance data table, and the pedestrian target output by a target fusion module, and an output signal is the dangerous region width ZS, the dangerous region length LS, the location of the pedestrian target, a region (the risky region/dangerous region) in which the pedestrian target is located, and the motion state (stationary, longitudinal, or lateral) of the pedestrian target. That is, target cognition and environmental cognition include two processes, that is, dangerous region cognition and dangerous pedestrian cognition. During dangerous region cognition, the pedestrian target complete collision avoidance data table is queried based on a current vehicle speed of the vehicle, a minimum of the corresponding dangerous region width ZS when the dangerous region length LS is not null is read, the minimum of the dangerous region width ZS is determined as a dangerous region width value in the current cycle, and a corresponding dangerous region length value is read. In the current cycle, a risky region width value is $\pm 4$ m, and a risky region length value is (15-LS) meters. In the dangerous pedestrian cognition process, the pedestrian target output by the target fusion module is received, whether the pedestrian is in the dangerous region and the risky region is determined based on the location of the pedestrian target, and all pedestrian targets in the dangerous region and the risky region are selected and output. Locations of the targets, regions (the risky region/dangerous region) in which the targets are located, and motion states (stationary, longitudinal, or lateral) of the targets are output. In some embodiments or accompanying drawings, the pedestrian target complete collision avoidance data table may also be referred to as a pedestrian complete collision avoidance table.

Hidden pedestrian fusion is performed on the sensor signal on the target vehicle to obtain a hidden pedestrian fusion result, and drivable region fusion is performed on the sensor signal on the target vehicle to obtain a drivable region signal.

Longitudinal running speed planning is performed on the target vehicle based on a pre-generated parking scene danger level recognition result, the hidden pedestrian fusion result, the dangerous pedestrian signal, the dangerous region signal, and the drivable region signal, and/or lateral running distance planning is performed on the target vehicle based on the dangerous pedestrian signal, the dangerous region signal, and the drivable region signal, to avoid contact between the target vehicle and the pedestrian target after planning.

Thus it can be learned that in this embodiment, the running environment and the pedestrian information outside the vehicle are sensed based on the existing sensor (for example, the front radar, the front camera, the 360-degree view camera, the ultrasonic sensor, or another sensor) of the vehicle by using the multi-sensor fusion method. Therefore, the location of the pedestrian target in the external space region of the vehicle can be determined based on the motion feature of the pedestrian target. In addition, in this embodiment, for pedestrian targets in different space regions, a control strategy of longitudinal running speed planning and/or lateral running distance planning is used for the vehicle, so that a possibility of contact between the vehicle and the pedestrian is reduced, and the pedestrian target outside is recognized and protected in a running process of the vehicle. To be specific, in this embodiment, a risk of collision between the vehicle and the pedestrian can be evaluated from aspects of the running environment, the pedestrian target, and the like, to further adjust a running status of the vehicle, thereby completing speed planning of the vehicle for avoiding collision with the pedestrian.

In an exemplary embodiment, a process of dividing the external space region of the target vehicle into a safe region and an unsafe region includes: determining, based on the predetermined pedestrian target complete collision avoidance data table, the maximum longitudinal distance of the target vehicle that completely avoids the front bumper and the rear bumper of the target vehicle from collision with the pedestrian target when the current longitudinal running speed is not reduced, and determining the maximum longitudinal distance as the dangerous region length; determining, based on the current longitudinal running speed of the target vehicle and the vehicle width of the target vehicle, the minimum of the corresponding dangerous region width when the dangerous region length is not null, and determining the minimum of the dangerous region width as the dangerous region width in the current cycle; combining the dangerous region length and the dangerous region width in the current cycle to generate the rectangular region, and determining the rectangular region as the dangerous region of the target vehicle; determining the risky region of the target vehicle based on the dangerous region of the target vehicle and the running environment of the target vehicle, the running environment of the target vehicle including the maximum longitudinal running speed of the target vehicle; combining the dangerous region and the risky region of the target vehicle as the unsafe region of the target vehicle; and determining a space region other than the unsafe region in the external space region of the target vehicle as the safe region of the target vehicle.

Specifically, in this embodiment, the process of dividing the external space region of the target vehicle into the safe region and the unsafe region may be: obtaining the predetermined pedestrian target complete collision avoidance data table. A calibration manner of data simulation and an on-vehicle experiment is used for the pedestrian target complete collision avoidance data table. The pedestrian target complete collision avoidance data table includes three dimensions. A horizontal dimension of a header indicates the dangerous region width ZS. A longitudinal dimension of the header indicates the longitudinal running speed of the vehicle. Each cell in the table indicates a maximum longitudinal distance capable of completely avoiding the front bumper and the rear bumper of the vehicle from collision with the pedestrian on the premise that the vehicle is not decelerated when the pedestrian walks laterally outside the dangerous region width ZS, that is, the dangerous region length. However, in this case, the dangerous region length may only indicate that the vehicle may not collide with the pedestrian within a length range of the dangerous region when the pedestrian walks laterally outside the dangerous region. However, the vehicle cannot be completely stopped and consequently may collide with the pedestrian in the risky region. Therefore, to avoid a pedestrian at any location in the risky region from collision, the dangerous region length needs to ensure that the vehicle is completely stopped, that is, the dangerous region length needs to be greater than a stop distance of the vehicle. In conclusion, the dangerous region length needs to satisfy the following two conditions. (1) The pedestrian is avoided from collision within the length range of the dangerous region when going laterally outside the dangerous region, that is, the dangerous region length satisfies $LS < (Zs-ZV)*V/Vp$. (2) The dangerous region length is greater than the stop distance of the vehicle, that is, the dangerous region length satisfies $LS > Lstop$. In the formulas, LS indicates the dangerous region length. ZS indicates the dangerous region width. ZV indicates an ego-vehicle width, which may be 1 m. V indicates the longitudinal running speed of the vehicle. The longitudinal running speed of the vehicle in a parking lot environment ranges from 0 to 16 km/h. Vp indicates a target pedestrian speed. An investigation result shows that a walking speed of an adult is 5 km/h. A lateral speed defaults to be less than 5 km/h when the pedestrian walks not completely laterally and a child and an old person walk completely laterally. Herein, a motion speed of the pedestrian is 5 km/h. Lstop indicates the stop distance of the vehicle. In the parking lot environment, a braking deceleration of the vehicle ranges from 0 m/s2 to -9 m/s2, and is -5 m/s2 herein. The pedestrian target complete collision avoidance data table in this embodiment is as shown in the following Table 1.

Table 1 Pedestrian target complete collision avoidance data table

| ZS (m)<br>V(km/h) | 1.8 | 1.9 | 2 | 2.1 | 2.2 | 2.3 | 2.4 | 2.5 | 2.6 | 2.7 |
|---|---|---|---|---|---|---|---|---|---|---|
| 1 | -- | 0.18 | 0.2 | 0.22 | 0.24 | 0.26 | 0.28 | 0.3 | 0.32 | 0.34 |
| 2 | -- | -- | 0.4 | 0.44 | 0.48 | 0.52 | 0.56 | 0.6 | 0.64 | 0.68 |
| 3 | -- | -- | 0.6 | 0.66 | 0.72 | 0.78 | 0.84 | 0.9 | 0.96 | 1.02 |
| 4 | -- | -- | 0.8 | 0.88 | 0.96 | 1.04 | 1.12 | 1.2 | 1.28 | 1.36 |
| 5 | | | | 1.1 | 1.2 | 1.3 | 1.4 | 1.5 | 1.6 | 1.7 |
| 6 | | | | 1.32 | 1.44 | 1.56 | 1.68 | 1.8 | 1.92 | 2.04 |
| 7 | | | | 1.54 | 1.68 | 1.82 | 1.96 | 2.1 | 2.24 | 2.38 |
| 8 | | | | | 1.92 | 2.08 | 2.24 | 2.4 | 2.56 | 2.72 |
| 9 | | | | | 2.16 | 2.34 | 2.52 | 2.7 | 2.88 | 3.06 |
| 10 | | | | | | 2.6 | 2.8 | 3 | 3.2 | 3.4 |
| 11 | | | | | | 2.86 | 3.08 | 3.3 | 3.52 | 3.74 |
| 12 | | | | | | | 3.36 | 3.6 | 3.84 | 4.08 |
| 13 | | | | | | | 3.64 | 3.9 | 4.16 | 4.42 |
| 14 | | | | | | | 3.92 | 4.2 | 4.48 | 4.76 |
| 15 | | | | | | | | 4.5 | 4.8 | 5.1 |
| 16 | | | | | | | | 4.8 | 5.12 | 5.44 |

In an exemplary embodiment, the method further includes that: a parking scene danger degree coefficient W is calculated based on danger degrees at different moments of a day, a parking lot busy-time danger degree, and a holiday danger degree. Specifically, the parking scene danger degree coefficient W may be obtained analytically based on the danger degrees $W_t$ at different moments of a day, the parking lot busy-time danger degree $W_p$, and the holiday danger degree $W_d$.

$$W = \frac{W_t \times W_p \times W_d}{27} \times 100\%$$

.

In the formula, W indicates the parking scene danger degree coefficient, and ranges from 0 to 100%; $W_t$ indicates the danger degrees at different moments of the day; $W_p$ indicates the parking lot busy-time danger degree; and $W_d$ indicates the holiday danger degree.

Specifically, in this embodiment, the danger degrees at different moments of the day are organized statistically based on 408 driving accidents, as shown in Table 2. Although statistics is made to the driving accidents, an activity energy situation of a person at different moments of the day can be learned. On the other hand, the number of accidents at different moments of the day obtained based on an existing analysis report about accidents in Europe is almost consistent with Table 2. Therefore, the danger degrees at different moments of the day is divided into three danger levels based on activity energy of the person. As shown in Table 3, the danger degrees are sequentially of a level 1, a level 2, and a level 3 from low to high.

Table 2 Statistical analysis table of driving accidents

| Time | 00:00 | 01:00 | 02:00 | 03:00 | 04:00 | 05:00 |
|---|---|---|---|---|---|---|

(continued)

| | | | | | | |
|---|---|---|---|---|---|---|
| Number of traffic accidents (number of times) | 9 | 2 | 2 | 3 | 4 | 14 |
| Percentage(%) | 2.2 | 0.5 | 0.5 | 0.7 | 1 | 3.4 |
| Injuries and deaths | 6 dead and 1 seriously injured | 1 dead and 1 slightly injured | 2 dead | 2 dead 1 and slightly injured | 2 dead, 1 seriously injured, and 1 slightly injured | 4 dead, 2 seriously injured, and 8 slightly injured |
| Time | 06:00 | 07:00 | 08:00 | 09:00 | 10:00 | 11:00 |
| Number of traffic accidents (number of times) | 13 | 9 | 18 | 17 | 23 | 27 |
| Percentag (%) | 3.2 | 2.2 | 4.4 | 4.2 | 5.6 | 6.6 |
| Injuries and deaths | 6 dead, 3 seriously injured, and 5 slightly injured | 2 dead, 3 seriously injured, and 4 slightly injured | 4 dead, 5 seriously injured, and 9 slightly injured | 4 dead, 2 seriously injured, and 11 slightly injured | 4 dead, 6 seriously injured, and 13 slightly injured | 3 dead, 2 seriously injured, and 22 slightly injured |
| Time | 12:00 | 13:00 | 14:00 | 15:00 | 16:00 | 17:00 |
| Number of traffic accidents (number of times) | 13 | 12 | 15 | 12 | 27 | 43 |
| Percentage (%) | 3.2 | 2.9 | 3.7 | 2.9 | 6.6 | 10.5 |
| Injuries and deaths | 2 dead, 2 seriously injured, and 9 slightly injured | 2 dead, 3 seriously injured, and 7 slightly injured | 4 dead, 3 seriously injured, and 8 slightly injured | 4 dead, 0 seriously injured, and 8 slightly injured | 6 dead, 3 seriously injured, and 18 slightly injured | 12 dead, 6 seriously injured, and 25 slightly injured |
| Time | 18:00 | 19:00 | 20:00 | 21:00 | 22:00 | 23:00 |
| Number of traffic accidents (number of times) | 36 | 49 | 32 | 16 | 9 | 3 |
| Percentage (%) | 8.8 | 12 | 7.8 | 3.9 | 2.2 | 0.7 |
| Injuries and deaths | 15 dead, 3 seriously injured, and 18 slightly injured | 10 dead, 10 seriously injured, and 31 slightly injured | 8 dead, 7 seriously injured, and 17 slightly injured | 6 dead, 4 seriously injured, and 6 slightly injured | 3 dead, 1 seriously injured, and 5 slightly injured | 1 dead, 1 seriously injured, and 1 slightly injured |

Table 3 Danger degrees Wt in different time periods of a day

| Number of traffic accidents | Less than 15 | 15 to 30 | More than 30 |
|---|---|---|---|
| | | | |

(continued)

| Number of traffic accidents | Less than 15 | 15 to 30 | More than 30 |
|---|---|---|---|
| Time period | 22:00 to 08:00; 12:00 to 15:00 | 08:00 to 12:00; 15:00 to 17:00; 21:00 to 22:00 | 17:00 to 21:00 |
| Danger degree | Level 1 | Level 2 | Level 3 |

For the parking lot busy-time danger degree, in this embodiment, the parking lot busy-time danger degree $W_p$ is divided into three danger levels based on a busy degree of the parking lot and a daily traffic flow (24 hours) of the parking lot. As shown in Table 4, the danger degrees Wp are sequentially of a level 1, a level 2, and a level 3 from low to high.

Table 4 Parking lot busy-time danger degree $W_p$

| Busy degree of a parking lot | Level 1 | Level 2 | Level 3 |
|---|---|---|---|
| Traffic flow per day | Less than 500 | 500 to 2000 | More than 2000 |

An activity of a person is closely related to a holiday. Therefore, for the holiday danger degree, in this embodiment, a statistical report of the Xidan commercial street in Beijing shows that a daily visitor flow of the Xidan commercial street at ordinary times is 145000, a daily visitor flow at weekends is 165000, and a daily visitor flow on statutory holidays is 230000. Therefore, it may be inferred that the holiday danger degree $W_d$ of a public place such as each shopping mall or hospital may be divided into three danger levels. As shown in Table 5, the danger degrees $W_d$ are sequentially of a level 1, a level 2, and a level 3 from low to high.

Table 5 Holiday danger degree $W_d$

| Holiday | Workday | Weekends (Saturday and Sunday) | Statutory holiday |
|---|---|---|---|
| Danger degree | Level 1 | Level 2 | Level 3 |

In an exemplary embodiment, a process of performing longitudinal running speed planning on the target vehicle includes: receiving the dangerous pedestrian signal, determining, based on the dangerous pedestrian signal, whether there is a dangerous pedestrian target, and if there is the pedestrian target in the dangerous region or the risky region, determining that there is the dangerous pedestrian target, or if there is no pedestrian target in the dangerous region and the risky region, determining that there is no dangerous pedestrian target; and when there is no dangerous pedestrian target, determining a first preset vehicle speed as a longitudinal running speed of the target vehicle; or when there is the dangerous pedestrian target, determining whether the pedestrian target is in the dangerous region; and if the pedestrian target is in the dangerous region and the pedestrian target is in a stationary state, controlling the target vehicle to remain the current longitudinal running speed; or if the pedestrian target is in the dangerous region and the pedestrian target is in the motion state, determining, based on the motion state of the pedestrian target and the current longitudinal running speed of the target vehicle, whether a first ratio is greater than a second ratio, and if the first ratio is greater than the second ratio, controlling the target vehicle to remain the current longitudinal running speed, or if the first ratio is less than or equal to the second ratio, planning a longitudinal running speed of the target vehicle based on low-speed emergency braking. The first ratio is a ratio of a lateral distance of the pedestrian target to a motion speed of the pedestrian target. The second ratio is a ratio of a longitudinal distance of the pedestrian target to the current longitudinal running speed of the target vehicle. As an example, the first preset vehicle speed may be adjusted based on an actual situation. For example, the first preset vehicle speed is 15 km/h.

In addition, the process of performing longitudinal running speed planning on the target vehicle further includes: if the pedestrian target is in the risky region and the pedestrian target is in the stationary state, determining whether there is a trajectory overlap between the target vehicle and the pedestrian target, and if there is no trajectory overlap between the target vehicle and the pedestrian target, controlling the target vehicle to run based on a second preset vehicle speed, or if there is the trajectory overlap between the target vehicle and the pedestrian target, controlling the longitudinal running speed of the target vehicle based on a distance between the pedestrian target and the target vehicle; or if the pedestrian target is in the risky region and the pedestrian target is in the motion state, determining, based on the motion state of the pedestrian target, whether the pedestrian target moves longitudinally, and if the pedestrian target moves longitudinally, determining whether there is a trajectory overlap between the target vehicle and the pedestrian target, and controlling the longitudinal running speed of the target vehicle based on a trajectory overlap determining result, or if the pedestrian target moves laterally, controlling the longitudinal running speed of the target vehicle based on a distance between the pedestrian target and the target vehicle. As an example, the second preset vehicle speed may be adjusted based on the actual situation. For example, the second preset vehicle speed is 7 km/h.

In addition, the process of performing longitudinal running speed planning on the target vehicle may further include: obtaining a longitudinal running speed of the target vehicle relative to each pedestrian target in the unsafe region, denoted as an expected longitudinal running speed corresponding to each pedestrian target; superimposing the expected longitudinal running speed corresponding to each pedestrian target, and taking a minimum to obtain a final expected longitudinal running speed corresponding to all dangerous pedestrian targets in the unsafe region as a current pedestrian target-based planned longitudinal running speed of the target vehicle, denoted as a first planned longitudinal running speed; and combining the first planned longitudinal running speed, a third planned longitudinal running speed, and a hidden pedestrian longitudinal speed to obtain a longitudinal running speed of the target vehicle when there is the pedestrian target in the unsafe region, and determining the longitudinal running speed as a final result of running speed adjustment performed on the target vehicle. The hidden pedestrian fusion result includes the hidden pedestrian longitudinal speed. The third planned longitudinal running speed is obtained based on the running environment of the target vehicle. As an example, in this embodiment, a process of obtaining the third planned longitudinal running speed includes: based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum; comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum; obtaining, based on the target vehicle lateral distance minimum and the pedestrian target complete collision avoidance data table, a maximum longitudinal running speed of the target vehicle in a current running environment as a second planned longitudinal running speed; calculating, based on the second planned longitudinal running speed, the parking scene danger degree coefficient, and a parking scene danger degree correction vehicle speed, a maximum vehicle speed supported by a current scene, the pre-generated parking scene danger level recognition result including the parking scene danger degree coefficient and the parking scene danger degree correction vehicle speed; and comparing the maximum vehicle speed supported by the current scene with a third preset vehicle speed, and determining the larger of the maximum vehicle speed supported by the current scene and the third preset vehicle speed as the third planned longitudinal running speed. As an example, the third preset vehicle speed may be adjusted based on the actual situation. For example, the third preset vehicle speed is 3 km/h.

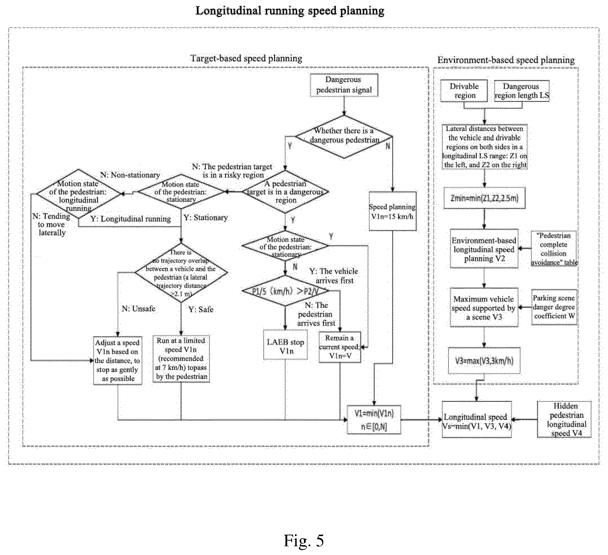

According to the foregoing description, specifically, as shown in Fig. 5, Fig. 5 is a schematic flowchart of planning the longitudinal running speed of the vehicle. In Fig. 5, longitudinal running speed planning includes two parts: target-based speed planning and environment-based speed planning. An input signal of longitudinal running speed planning is the pedestrian target complete collision avoidance data table, the dangerous pedestrian signal, the dangerous region signal, and the drivable region signal. The longitudinal speed V of the vehicle in the current cycle is obtained through speed planning.

Environment-based speed planning obtains an environment-based planned longitudinal running speed V2 of the vehicle based on the danger degree of the current environment. A specific process is as follows.

In step (1-1), based on the dangerous region length LS in the current cycle, the width minimum Z1 with the obstacle on the left side and the width minimum Z2 with the obstacle on the right side in the longitudinal LS range of the drivable region are read.

In step (1-2), the lateral distance minimum between the vehicle and the obstacles on both sides in the dangerous region is $Zmin = min(Z1, Z2, 2.5 \text{ m})$.

In step (1-3), the lateral distance minimum Zmin with the obstacles on both sides is output as the dangerous region width ZS, and the pedestrian target complete collision avoidance data table is queried to obtain the maximum longitudinal running speed V2 supported in the current environment.

In step (1-4), the maximum vehicle speed V3 supported by the scene is obtained based on the parking scene danger degree coefficient W: $V3 = V2 - Vx*W$.

In step (1-5), considering possibility of passing an extremely narrow scene, the maximum vehicle speed $V3 = max(V3, 3 \text{ km/h})$ supported in the current environment is corrected to obtain a third longitudinal running speed.

Target-based speed planning obtains a current pedestrian target-based planned longitudinal running speed V1n of the vehicle based on the danger degree of the current pedestrian target. A specific process is as follows.

In step (2-1), the dangerous pedestrian signal is received, and whether there is currently a dangerous pedestrian is determined. If there is currently no dangerous pedestrian, the target-based planned longitudinal running speed of the vehicle is V1n=15 km/h; or if there is currently a dangerous pedestrian, step (2-2) is performed.

In step (2-2), whether the pedestrian target is in the dangerous region is determined. If the pedestrian target is in the dangerous region, step (2-3) is performed; or if the pedestrian target is not in the dangerous region, step (2-5) is performed.

In step (2-3), whether the motion state of the pedestrian is stationary. If the motion state of the pedestrian is stationary, the current speed is remained based on target planning: V1n=V; or if the motion state of the pedestrian is not stationary, step (2-4) is performed.

In step (2-4), whether the pedestrian or the vehicle arrives at a collision point first is determined, and whether P1/Vp>P2/V is true is determined. If P1/Vp>P2/V is true, the vehicle arrives at the collision point first, that is, there is no risk of collision with the pedestrian, and the current speed is remained: V1n=V; or If P1/Vp>P2/V is false, the pedestrian arrives at the collision point first, that is, there is a risk of collision with the pedestrian, and the speed is planned based on low-speed emergency braking (LAEB).

In step (2-5), whether the motion state of the pedestrian is stationary. If the motion state of the pedestrian is stationary, the pedestrian is stationary, and step (2-6) is performed; or if the motion state of the pedestrian is not stationary, the pedestrian is not stationary, and step (2-7) is performed.

In step (2-6), whether there is a trajectory overlap between the vehicle and the pedestrian is determined, that is whether a lateral trajectory distance is greater than 2.1 m is determined. If the lateral trajectory distance is greater than 2.1 m, there is no trajectory overlap between the pedestrian and the vehicle, the pedestrian is safe, and the vehicle passes by the pedestrian at a limited speed, recommended at V1n=7 km/h; or if the lateral trajectory distance is greater than 2.1 m, there is the trajectory overlap between the pedestrian and the vehicle, the pedestrian is unsafe, and the vehicle needs to adjust the speed V1n based on a distance from the pedestrian to stop as gently as possible.

In step (2-7), whether the motion state of the pedestrian is running longitudinally. If the motion state of the pedestrian is running longitudinally, the pedestrian moves longitudinally without a lateral motion trend, and step (2-6) is performed; or if the motion state of the pedestrian is not running longitudinally, the pedestrian tends to move laterally, the pedestrian is unsafe, and the vehicle needs to adjust the speed V1n based on a distance from the pedestrian to stop as gently as possible.

In step (2-8), in the current cycle, there are N pedestrian targets in the dangerous region and the risky region, the foregoing current-target-based speed planning steps are repeated for each pedestrian target to obtain the expected longitudinal running speed V1n corresponding to each pedestrian target, the expected longitudinal running speed corresponding to each pedestrian target is superimposed, and a minimum is taken: V1 =min(V1n)n∈[0, N], to obtain the final expected longitudinal running speed V1 based on all dangerous pedestrian targets.

Hidden-pedestrian-based speed planning obtains a longitudinal speed V4 of the hidden pedestrian based on an existence status of the current hidden pedestrian. A specific process is as follows.

1. When a hidden pedestrian flag bit indicates that there is a hidden pedestrian, a longitudinal location of the hidden pedestrian is less than or equal to 10 m, confidence of the hidden pedestrian is more than or equal to 80%, and a hidden pedestrian detection sensor is R or R+V, a current hidden pedestrian-based longitudinal collision avoidance strategy of the vehicle is gentle stopping.

2. When a hidden pedestrian flag bit indicates that there is a hidden pedestrian, a longitudinal location of the hidden pedestrian is greater than 10 m, confidence of the hidden pedestrian is more than or equal to 80%, and a hidden pedestrian detection sensor is R or R+V, a current hidden pedestrian-based longitudinal collision avoidance strategy of the vehicle is limiting the speed to 5 km/h.

3. When a hidden pedestrian flag bit indicates that there is a hidden pedestrian, confidence of the hidden pedestrian is more than or equal to 80%, and a hidden pedestrian detection sensor is V, a current hidden pedestrian-based longitudinal collision avoidance strategy of the vehicle is limiting the speed to 4 km/h.

4. In another case, there is no current hidden pedestrian-based longitudinal collision avoidance strategy.

Environment-based speed planning obtains the expected speed vehicle V3 of the vehicle. Target-based speed planning obtains the expected vehicle speed V1 of the vehicle. hidden-pedestrian-based planning obtains the expected vehicle speed V4 of the vehicle. The longitudinal running speed Vs=min(V1, V3, V4) planned at the current moment is obtained.

In an exemplary embodiment, a process of performing lateral running distance planning based on the dangerous pedestrian signal, the dangerous region signal, and the drivable region signal includes: based on a drivable region corresponding to the drivable region signal and the dangerous region length, reading a width minimum with an obstacle on a left side of the target vehicle in a longitudinal range of a drivable region, denoted as a first width minimum, and reading a width minimum with an obstacle on a right side of the target vehicle in the longitudinal range of the drivable region, denoted as a second width minimum; comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum; calculating a difference between the first width minimum and the second width minimum, denoted as a first difference, and determining whether an absolute value of the first difference is greater than or equal to a first preset value; and if the absolute value is less than the first preset value, determining that there is no deviation space for the target vehicle at a current moment, and skipping performing lateral running distance adjustment on the target vehicle; or

if the absolute value is greater than or equal to the first preset value, determining that there is a deviation space for the target vehicle at a current moment, and determining whether the target vehicle lateral distance minimum is less than or equal to a second preset value; and if the target vehicle lateral distance minimum is greater than the second preset value, determining that there is no deviation requirement at the current moment, and skipping performing lateral running distance adjustment on the target vehicle, or if the target vehicle lateral distance minimum is less than or equal to the second preset value, determining that there is a deviation requirement at the current moment, receiving the dangerous pedestrian signal, and determining, based on the dangerous pedestrian signal, whether there is a dangerous pedestrian target; and if there is the pedestrian target in the dangerous region or the risky region, determining that there is the dangerous pedestrian target, and skipping performing lateral running distance adjustment on the target vehicle, or if there is no pedestrian target in the dangerous region and the risky region, determining that there is no dangerous pedestrian target, and performing lateral running distance adjustment on the target vehicle.

In addition, if there is no pedestrian target in the dangerous region and the risky region, a process of performing lateral running distance adjustment on the target vehicle includes: calculating a difference between the preset optimal lateral distance and the target vehicle lateral distance minimum, denoted as a second difference; determining whether twice of the second difference is less than or equal to the absolute value of the first difference, and if twice of the second difference is less than or equal to the absolute value of the first difference, determining the second difference as a lateral deviation distance of the target vehicle, or if twice of the second difference is greater than the absolute value of the first difference, determining a half of the absolute value of the first difference as a lateral deviation distance of the target vehicle; and determining whether the second difference is greater than or equal to zero, and if the second difference is greater than or equal to zero, controlling the target vehicle to deviate leftwards based on the corresponding lateral deviation distance, or if the second difference is less than zero, controlling the target vehicle to deviate rightwards based on the corresponding lateral deviation distance.

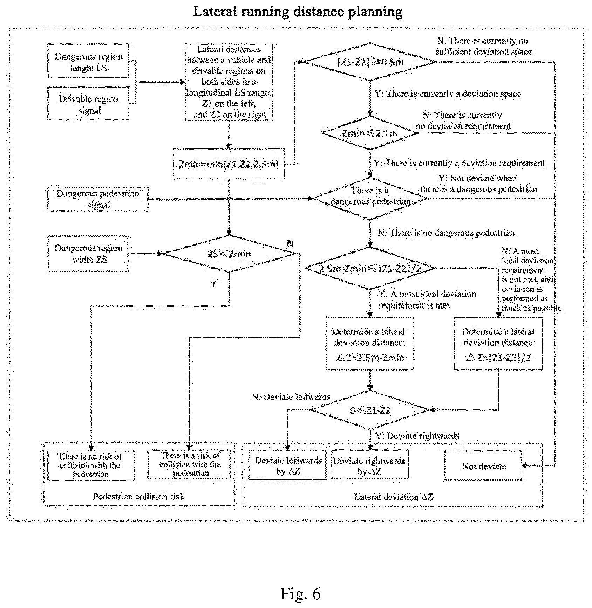

According to the foregoing description, specifically, as shown in Fig. 6, Fig. 6 is a schematic flowchart of planning the lateral running distance of the vehicle. In Fig. 6, a specific calculation process of a lateral running distance offset of the vehicle in the current cycle is as follows.

In step (3-1), the dangerous region signal and the drivable region signal are received, and based on the dangerous region length LS in the current cycle, the left-side width minimum Z1 in the longitudinal LS range of the drivable region and the right-side width minimum Z2 in the longitudinal LS range of the drivable region are read.

In step (3-2), the lateral distance minimum between the vehicle and the obstacles on both sides in the dangerous region is Zmin=min(Z1, Z2, 2.5 m).

In step (3-3), whether there is currently the deviation space for the vehicle is determined, that is, whether |Z1-Z2|≥0.5 m is true is determined. If |Z1-Z2|≥0.5 m is true, there is currently the deviation space, and step (3-4) is performed; or if |Z1-Z2|≥0.5 m is false, there is currently no sufficient deviation space, and the vehicle does not deviate.

In step (3-4), whether the vehicle currently has the deviation requirement is determined, that is, whether the lateral distance minimum with the obstacles on both sides satisfies |Z1-Z2|≥0.5 m is determined. If |Z1-Z2|≥0.5 m is true, there is currently the deviation requirement, and step (3-5) is performed; or if |Z1-Z2|≥0.5 m is false, there is sufficient space between the vehicle and the obstacles on both sides, and the vehicle has no deviation requirement, and does not deviate.

In step (3-5), whether it is currently risky for the vehicle to deviate is determined, that is, whether there is currently a dangerous pedestrian in the dangerous region and the risky region is determined. If it is currently risky for the vehicle to deviate, there is a dangerous pedestrian around the vehicle, deviation may cause a collision risk, and the vehicle does not deviate; or if it is currently not risky for the vehicle to deviate, there is no dangerous pedestrian around the vehicle, deviation of the vehicle may not cause a collision risk, and step (3-6) is performed.

In step (3-6), whether the current environment satisfies the optimal lateral distance 2.5 m with the obstacles on both sides is determined, that is, whether 2.5 m-Zmin≤|Z1-Z2|/2 is true is determined. If 2.5 m-Zmin≤|Z1-Z2|/2 is true, the most ideal deviation requirement is met, and the lateral deviation distance of the vehicle is ΔZ=2.5 m-Z min; or if 2.5 m-Zmin≤|Z1-Z2|/2 is false, the most ideal deviation requirement is not met, and a lateral deviation distance that may be met currently is calculated: ΔZ=|Z1-Z2|/2.

In step (3-7), a current deviation direction of the vehicle is determined, that is, whether the difference of the lateral distances between the vehicle and the obstacles on both sides satisfies 0≤Z1-Z2 is determined. If 0≤Z1-Z2 is true, there is a larger space on the right side of the vehicle, and the vehicle deviates rightwards by ΔZ; or if 0≤Z1-Z2 is false, there is a larger space on the left side of the vehicle, and the vehicle deviates leftwards by ΔZ.

In an exemplary embodiment, a process of performing lateral running distance planning based on the dangerous pedestrian signal, the dangerous region signal, and the drivable region signal includes: based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum; comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum; determining whether the target vehicle lateral distance minimum is greater than the dangerous region width; and if the target vehicle lateral distance minimum is greater than the dangerous region width, determining that there is no real-time pedestrian target collision risk; or if the target vehicle lateral distance minimum is less than or equal to the dangerous region width, determining that there is a real-time pedestrian target collision risk. In this case, the pedestrian in the dangerous region is hidden and may not be detected and sensed in time.

Specifically, as shown in Fig. 6, a specific pedestrian collision risk evaluation process is as follows.

In step (4-1), the dangerous region signal and the drivable region signal are received, and the width minimum Z1 with the obstacle on the left side and the width minimum Z2 with the obstacle on the right side in the longitudinal LS range of the drivable region are read.

In step (4-2), the lateral distance minimum between the vehicle and the obstacles on both sides in the dangerous region is Zmin=min(Z1, Z2, 2.5 m).

In step (4-3), whether the lateral distance minimum Zin with the obstacles on both sides is greater than the dangerous region width ZS is determined. If the lateral distance minimum Zin with the obstacles on both sides is greater than the dangerous region width ZS, there is no obstacle blocking the "line of sight" of the sensor in the dangerous region, the pedestrian in the dangerous region is not hidden, lateral and longitudinal distance values of the dangerous region meet a pedestrian target complete collision avoidance requirement, and there is no risk of collision with the pedestrian; or if the lateral distance minimum Zin with the obstacles on both sides is not greater than the dangerous region width ZS, the "line of sight" of the sensor may be blocked, and the pedestrian in the dangerous region may be blocked and cannot be detected and sensed in time, resulting in a risk of collision with the pedestrian.

According to the foregoing descriptions in some exemplary embodiments, this embodiment further provides a solution to protection of a pedestrian outside a vehicle during vehicle running control. In this embodiment, a system for protecting a pedestrian outside a vehicle includes a target fusion module, a hidden pedestrian fusion module, a drivable region fusion module, a parking scene danger level recognition module, a target cognition and environmental cognition module, a longitudinal running speed planning module, and a lateral running distance planning module. An input source of the system for protecting a pedestrian outside a vehicle includes parking scene attribute information, time, a holiday, the pedestrian target complete collision avoidance data table, and an external sensor. An output signal of the system for protecting a pedestrian outside a vehicle includes the running speed V of the vehicle, the lateral deviation $\Delta Z$ of the vehicle, and the pedestrian collision risk. The target fusion module performs multi-sensor information fusion based on the input signal of the external sensor, to obtain the pedestrian target and an attribute value of the pedestrian target, including a target ID, a target type, lateral and longitudinal distances of the target, a longitudinal relative speed of the target, and the like. The drivable region fusion module performs multi-sensor information fusion based on the input signal of the external sensor, to obtain a related signal of the drivable region of the vehicle. The drivable region signal includes lateral and longitudinal distances of border points of the drivable region, and the like. An input signal of the target cognition and environmental cognition module is the pedestrian target complete collision avoidance data table, and the pedestrian target and the attribute value of the pedestrian target that are output by the target fusion module. Dangerous target screening and environmental danger degree cognition are performed to output the dangerous pedestrian signal and the dangerous region signal in the current environment. An input signal of the longitudinal running speed planning module is the pedestrian target complete collision avoidance data table, the dangerous pedestrian signal, the dangerous region signal, and the drivable region signal. The longitudinal speed V of the vehicle in the current cycle is obtained through speed planning. An input signal of the lateral running distance planning module is the dangerous pedestrian signal, the dangerous region signal, and the drivable region signal. The lateral deviation of the vehicle in the current cycle and the pedestrian collision risk are obtained through lateral motion planning.

In conclusion, according to the vehicle running control method provided in the present application, target fusion is performed on the sensor signal on the target vehicle to obtain the pedestrian target information in the external space region of the target vehicle, hidden pedestrian fusion is performed on the sensor signal on the target vehicle to obtain the hidden pedestrian fusion result. Drivable region fusion is performed on the sensor signal on the target vehicle to obtain the drivable region signal. In addition, target cognition and environmental cognition are performed on the target vehicle based on the predetermined pedestrian target complete collision avoidance data table and the pedestrian target information, to obtain the dangerous pedestrian signal and the dangerous region signal. Finally, longitudinal running speed planning is performed on the target vehicle based on the pre-generated parking scene danger level recognition result, the hidden pedestrian fusion result, the dangerous pedestrian signal, the dangerous region signal, and the drivable region signal, and/or lateral running distance planning is performed on the target vehicle based on the dangerous pedestrian signal, the dangerous region signal, and the drivable region signal, to avoid contact between the target vehicle and the pedestrian target after planning. The target vehicle includes the current vehicle. The pedestrian target information includes the pedestrian target and the pedestrian target attribute information. Thus it can be learned that in the method, the running environment and the pedestrian information outside the vehicle are sensed based on the existing sensor (for example, the front radar, the front camera, the 360-degree view camera, the ultrasonic sensor, or another sensor) of the vehicle by using the multi-sensor fusion method. Therefore, the location of the pedestrian target in the external space region of the vehicle can be determined based on the motion feature of the pedestrian target. In addition, in the method, for pedestrian targets in different space regions, a control strategy of longitudinal running speed planning and/or lateral running distance planning is used for the vehicle, so that mistaken braking and missing braking for pedestrians outside the vehicle are effectively eliminated, a possibility of contact between the vehicle and the pedestrian is reduced, and the pedestrian target outside is recognized and protected in a running process of the vehicle. To be specific, in the method, a risk of collision between the vehicle and the pedestrian can be evaluated from aspects of the running environment, the pedestrian target, and the like, to further adjust a running status of the vehicle, thereby completing speed planning of the vehicle for avoiding collision with the pedestrian.

In addition, in the method, the systematic solution to protection of a pedestrian outside a vehicle may further be provided from the aspects of the target fusion module, the drivable region fusion module, the target cognition and environmental cognition module, the longitudinal running speed planning module, the lateral running distance planning module and the like, and pedestrians of different longitudinal running speeds, different locations, and different motion states can be covered, so that a problem of complete collision avoidance of a pedestrian outside a vehicle in an extreme scene (the pedestrian suddenly appears in a dead zone) is effectively solved. Moreover, in the method, the pedestrian target complete collision avoidance data table is designed and calibrated to provide the systematic solution to protection of a pedestrian outside a vehicle from the aspects of the parking scene danger level recognition module, the target fusion module, the hidden pedestrian fusion module, the drivable region fusion module, the target cognition and environmental cognition module, the longitudinal running speed planning module, the lateral running distance planning module and the like, and pedestrians of different vehicle speeds, different locations, and different motion states can be covered, so that collision avoidance can be radically implemented for pedestrians in the dangerous region and the risky region. Further, in the method, risk evaluation is performed on the pedestrian mainly based on the location and the motion state (stationary/moving) of the pedestrian rather than pedestrian speed detection accuracy.

To be specific, in the method, a region around the vehicle is divided into the dangerous region, the risky region, and the safe region based on a risk characteristic of the pedestrian, and different systematic strategies are used for pedestrians in different regions, so that mistaken braking and missing braking for pedestrians outside the vehicle are effectively eliminated. In addition, in the method, the danger level of the current parking scene can be recognized based on the parking scene attribute information, the current time, and current holiday information, and longitudinal speed planning can be performed on the vehicle based on the danger level of the parking scene. Moreover, the longitudinal running speed planning module may evaluate the pedestrian collision risk from the three aspects of the "environment", the "target", and the "hidden pedestrian", thereby completing pedestrian collision avoidance speed planning. In addition, lateral deviation planning of the vehicle can be implemented based on the running space environment of the vehicle and a pedestrian target sensing result.

In another exemplary embodiment of the present application, this embodiment further provides a vehicle running control apparatus, including:

a target fusion module, configured to perform target fusion on a sensor signal on a target vehicle to obtain pedestrian target information in an external space region of the target vehicle, the target vehicle including a current vehicle, and the pedestrian target information including a pedestrian target and pedestrian target attribute information;

a target cognition and environmental cognition module, configured to perform target cognition and environmental cognition on the target vehicle based on a predetermined pedestrian target complete collision avoidance data table and the pedestrian target information, to obtain a dangerous pedestrian signal and a dangerous region signal;

a hidden pedestrian fusion module, configured to perform hidden pedestrian fusion on the sensor signal on the target vehicle to obtain a hidden pedestrian fusion result;

a drivable region fusion module, configured to perform drivable region fusion on the sensor signal on the target vehicle to obtain a drivable region signal; and

a vehicle running planning control module, configured to perform longitudinal running speed planning and/or lateral running distance planning on the target vehicle based on the dangerous pedestrian signal, the dangerous region signal, and the drivable region signal, to avoid contact between the target vehicle and the pedestrian target after planning.

It should be noted that the vehicle running control apparatus provided in the foregoing embodiment belongs to the same concept as the vehicle running control method provided in the foregoing embodiment. Specific manners in which each module executes the operations have been described in detail in the method embodiment, and details are not described herein again. During actual application, depending on a requirement, the vehicle running control apparatus provided in the foregoing embodiment may allocate the functions to different functional modules for implementation, that is, an internal structure of the apparatus is divided into different functional modules to implement all or some of the functions described above. For example, the vehicle running planning control module may be divided into a longitudinal running speed planning module and a lateral running distance planning module. An input signal of the longitudinal running speed planning module is the pedestrian target complete collision avoidance data table, the dangerous pedestrian signal, the dangerous region signal, and the drivable region signal. A longitudinal speed V of the vehicle in a current cycle is obtained through speed planning. An input signal of the lateral running distance planning module is the dangerous pedestrian signal, the dangerous region signal, and the drivable region signal. A lateral deviation of the vehicle in the current cycle and a pedestrian collision risk are obtained through lateral motion planning.

Thus it can be learned that according to the vehicle running control apparatus provided in the present application, target fusion is performed on the sensor signal on the target vehicle to obtain the pedestrian target information in the external space region of the target vehicle, hidden pedestrian fusion is performed on the sensor signal on the target vehicle to obtain the hidden pedestrian fusion result. Drivable region fusion is performed on the sensor signal on the target vehicle to obtain the drivable region signal. In addition, target cognition and environmental cognition are performed on the target vehicle based on the predetermined pedestrian target complete collision avoidance data table and the pedestrian target information, to obtain the dangerous pedestrian signal and the dangerous region signal. Finally, longitudinal running speed planning is performed on the target vehicle based on the pre-generated parking scene danger level recognition result, the hidden pedestrian fusion result, the dangerous pedestrian signal, the dangerous region signal, and the drivable region signal, and/or lateral running distance planning is performed on the target vehicle based on the dangerous pedestrian signal, the dangerous region signal, and the drivable region signal, to avoid contact between the target vehicle and the pedestrian target after planning. The target vehicle includes the current vehicle. The pedestrian target information includes the pedestrian target and the pedestrian target attribute information. Thus it can be learned that the apparatus senses a running environment and pedestrian information outside the vehicle based on an existing sensor (for example, a front radar, a front camera, a 360-degree view camera, an ultrasonic sensor, or another sensor) of the vehicle by using a multi-sensor fusion method. Therefore, a location of the pedestrian target in the external space region of the vehicle can be determined based on a motion feature of the pedestrian target. In addition, for pedestrian targets in different space regions, the apparatus uses a control strategy of longitudinal running speed planning and/or lateral running distance planning for the vehicle, so that mistaken braking and missing braking for pedestrians outside the vehicle are effectively eliminated, a possibility of contact between the vehicle and the pedestrian is reduced, and the pedestrian target outside is recognized and protected in a running process of the vehicle. To be specific, the apparatus can evaluate a risk of collision between the vehicle and the pedestrian from aspects of the running environment, the pedestrian target, and the like, to further adjust a running status of the vehicle, thereby completing speed planning of the vehicle for avoiding collision with the pedestrian. In addition, the apparatus may further provide a systematic solution to protection of a pedestrian outside a vehicle from the aspects of the target fusion module, the drivable region fusion module, the target cognition and environmental cognition module, the longitudinal running speed planning module, the lateral running distance planning module and the like, and pedestrians of different longitudinal running speeds, different locations, and different motion states can be covered, so that a problem of complete collision avoidance of a pedestrian outside a vehicle in an extreme scene (the pedestrian suddenly appears in a dead zone) is effectively solved. Moreover, the apparatus designs and calibrates the pedestrian target complete collision avoidance data table to provide the systematic solution to protection of a pedestrian outside a vehicle from the aspects of the parking scene danger level recognition module, the target fusion module, the hidden pedestrian fusion module, the drivable region fusion module, the target cognition and environmental cognition module, the longitudinal running speed planning module, the lateral running distance planning module and the like, and pedestrians of different vehicle speeds, different locations, and different motion states can be covered, so that collision avoidance can be radically implemented for pedestrians in the dangerous region and the risky region. Further, the apparatus performs risk evaluation on the pedestrian mainly based on the location and the motion state (stationary/moving) of the pedestrian rather than pedestrian speed detection accuracy.

To be specific, the apparatus divides a region around the vehicle into a dangerous region, a risky region, and a safe region based on a risk characteristic of the pedestrian, and uses different systematic strategies for pedestrians in different regions, so that mistaken braking and missing braking for pedestrians outside the vehicle are effectively eliminated. In addition, the apparatus may recognize a danger level of a current parking scene based on parking scene attribute information, current time, and current holiday information, and perform longitudinal speed planning on the vehicle based on the danger level of the parking scene. Moreover, the longitudinal running speed planning module may evaluate the pedestrian collision risk from the three aspects of the "environment", the "target", and the "hidden pedestrian", thereby completing pedestrian collision avoidance speed planning. In addition, lateral deviation planning of the vehicle can be implemented based on the running space environment of the vehicle and a pedestrian target sensing result.

An embodiment of the present application further provides a vehicle running control device, including: one or more processors; and a storage apparatus, configured to store one or more programs. When the one or more programs are executed by the one or more processors, the vehicle running control device is enabled to implement the vehicle running control method provided in each of the foregoing embodiments.

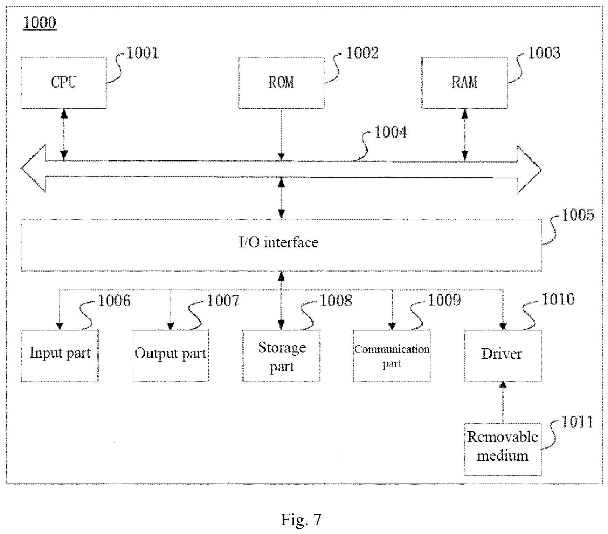

Fig. 7 is a schematic diagram of a structure of a computer system of a vehicle running control device suitable for implementing an embodiment of the present application. It should be noted that the computer system 1000 of the vehicle running control device in Fig. 7 is merely an example and should not form any limitation on a function and an application scope of the embodiments of the present application.

As shown in Fig. 7, the computer system 1000 includes a central processing unit (CPU) 1001 capable of executing various appropriate actions and processing based on a program stored in a read-only memory (ROM) 1002 or a program loaded from a storage part 1008 to a random access memory (RAM) 1003, for example, executing the method in the foregoing embodiment. Various programs and data required for operations of the system may further be stored in the RAM 1003. The CPU 1001, the ROM 1002, and the RAM 1003 are connected to one another through a bus 1004. An input/output (I/O) interface 1005 is also connected to the bus 1004.

The following components are connected to the I/O interface 1005: an input part 1006 including a keyboard, a mouse, and the like; an output part 1007 including a cathode ray tube (CRT), a liquid crystal display (LCD), a speaker, and the like; the storage part 1008 including a hard disk and the like; and a communication part 1009 including a network interface card such as a local area network (LAN) card and a modem. The communication part 1009 executes communication processing through a network such as the Internet. A driver 1010 is also connected to the I/O interface 1005 as required. A removable medium 1011, for example, a magnetic disk, an optical disk, a magneto-optical disk, or a semiconductor memory, is installed on the driver 1010 as required, so that a computer program read therefrom is installed in the storage part 1008 as required.

Particularly, according to the embodiments of the present application, the processes described above with reference to the flowcharts may be implemented as computer software programs. For example, an embodiment of the present application includes a computer program product, including a computer program carried on a computer-readable medium. The computer program includes a computer program for performing the methods shown in the flowcharts. In this embodiment, the computer program may be downloaded from the network and installed through the communication part 1009 and/or installed from the removable medium 1011. When the computer program is executed by the CPU 1001, functions defined in the apparatus of the present application are performed.

It should be noted that the computer-readable medium shown in this embodiment of the present application may be a computer-readable signal medium, a computer-readable storage medium, or any combination thereof. The computer-readable storage medium may be, for example, an electrical, magnetic, optical, electromagnetic, infrared, or semiconductor system, apparatus, or device, or any combination thereof. More specific examples of the computer-readable storage medium may include but are not limited to an electrical connection with one or more wires, a portable computer diskette, a hard disk, a RAM, a ROM, an erasable programmable read-only memory (EPROM), a flash memory, an optical fiber, a portable compact disc read-only memory (CD-ROM), an optical storage device, a magnetic storage device, or any appropriate combination thereof. In the present application, the computer-readable signal medium may include a data signal that is propagated in baseband or as part of a carrier wave, in which computer-readable program code is carried. Such a propagated data signal may be in a variety of forms, including but not limited to, an electromagnetic signal, an optical signal, or any appropriate combination thereof. The computer-readable signal medium may also be any computer-readable medium except the computer-readable storage medium, and the computer-readable medium may send, propagate, or transmit a program configured to be used by or in combination with an instruction execution system, device, or apparatus. The computer program contained in the computer-readable medium may be transmitted with any appropriate medium, including but not limited to a wireless connection, a wired connection, or any appropriate combination thereof.

The flowcharts and the block diagrams in the drawings illustrate possible system architectures, functions, and operations of the apparatus, the method, and the computer program product according to various embodiments of the present application. Each box in a flowchart or a block diagram may represent a module, a program segment, or a part of code. The module, the program segment, or the part of code includes one or more executable instructions used for implementing designated logic functions. It should also be noted that in some alternative implementations, the functions marked in the boxes may be realized in a sequence different from those marked in the drawings. For example, actually two blocks shown in succession may be performed basically in parallel, and sometimes the two boxes may be performed in a reverse sequence. This is determined by a related function. It should further be noted that each box in a block diagram or a flowchart and a combination of boxes in the block diagram and the flowchart may be implemented by a dedicated hardware-based system configured to perform a specified function or operation, or may be implemented by a combination of dedicated hardware and a computer instruction.

Describing the unit involved in the embodiments of the present application may be implemented by software, or may be implemented by hardware. The described unit may also be disposed in the processor. The name of the unit does not form any limitation on the unit in some cases.

Another aspect of the present application further provides a computer-readable storage medium. A computer program is stored on the computer-readable storage medium. When the computer program is executed by a processor of a computer, the computer is enabled to perform the vehicle running control method described above. The computer-readable storage medium may be included in the vehicle running control device described in the foregoing embodiment, or may be independent and not assembled in the vehicle running control device.

Another aspect of the present application provides a computer program product or a computer program. The computer program product or the computer program includes computer instructions. The computer instructions are stored in a computer-readable storage medium. A processor of a computer device reads the computer instructions from the computer-readable storage medium. The processor executes the computer instructions to enable the computer device to perform the vehicle running control method provided in each of the foregoing embodiments.

The foregoing embodiments only illustrate the principles and effects of the present application by using examples, but are not intended to limit the present application. Any person familiar with this technology can make modifications or variations to the foregoing embodiments without departing from the spirit and scope of the present application. Therefore, all equivalent modifications or variations made by a person of ordinary skill in the technical field without departing from the spirit and technical ideas disclosed in the present application shall still fall within the claims of the present application.

**Claims**

1. A vehicle running control method, **characterized in that** the method comprises the following steps:

   performing target fusion on a sensor signal on a target vehicle to obtain pedestrian target information in an external space region of the target vehicle, the target vehicle comprising a current vehicle, and the pedestrian target information comprising a pedestrian target and pedestrian target attribute information;
   performing target cognition and environmental cognition on the target vehicle based on a predetermined pedestrian target complete collision avoidance data table and the pedestrian target information, to obtain a dangerous pedestrian signal and a dangerous region signal;
   performing hidden pedestrian fusion on the sensor signal on the target vehicle to obtain a hidden pedestrian fusion result, and performing drivable region fusion on the sensor signal on the target vehicle to obtain a drivable region signal; and
   performing longitudinal running speed planning on the target vehicle based on a pre-generated parking scene danger level recognition result, the hidden pedestrian fusion result, the dangerous pedestrian signal, the dangerous region signal, and the drivable region signal, and/or performing lateral running distance planning on the target vehicle based on the dangerous pedestrian signal, the dangerous region signal, and the drivable region signal, to avoid contact between the target vehicle and the pedestrian target after planning.

2. The vehicle running control method according to claim 1, **characterized in that** a process of performing target cognition and environmental cognition on the target vehicle based on a predetermined pedestrian target complete collision avoidance data table and the pedestrian target information, to obtain a dangerous pedestrian signal and a dangerous region signal comprises:

   determining, based on the predetermined pedestrian target complete collision avoidance data table, a maximum longitudinal distance of the target vehicle that completely avoids a front bumper and a rear bumper of the target vehicle from collision with the pedestrian target when a current longitudinal running speed is not reduced, and determining the maximum longitudinal distance as a dangerous region length;
   determining, based on the current longitudinal running speed of the target vehicle and a vehicle width of the target vehicle, a minimum of a corresponding dangerous region width when the dangerous region length is not null, and determining the minimum of the dangerous region width as a dangerous region width in a current cycle;
   combining the dangerous region length and the dangerous region width in the current cycle to generate a rectangular region, and generating the dangerous region signal by taking the rectangular region as a dangerous region of the target vehicle;
   determining a risky region of the target vehicle based on the dangerous region of the target vehicle and a running environment of the target vehicle, the running environment of the target vehicle comprising a maximum longitudinal running speed of the target vehicle; and

generating the dangerous pedestrian signal based on a motion state of the pedestrian target and whether a location of the pedestrian target is in the dangerous region or the risky region.

3. The vehicle running control method according to claim 2, **characterized in that** a process of performing longitudinal running speed planning on the target vehicle comprises:

receiving the dangerous pedestrian signal, determining, based on the dangerous pedestrian signal, whether there is a dangerous pedestrian target, and if there is the pedestrian target in the dangerous region or the risky region, determining that there is the dangerous pedestrian target, or if there is no pedestrian target in the dangerous region and the risky region, determining that there is no dangerous pedestrian target; and

when there is no dangerous pedestrian target, determining a first preset vehicle speed as a longitudinal running speed of the target vehicle; or

when there is the dangerous pedestrian target, determining whether the pedestrian target is in the dangerous region; and

if the pedestrian target is in the dangerous region and the pedestrian target is in a stationary state, controlling the target vehicle to remain the current longitudinal running speed; or

if the pedestrian target is in the dangerous region and the pedestrian target is in the motion state, determining, based on the motion state of the pedestrian target and the current longitudinal running speed of the target vehicle, whether a first ratio is greater than a second ratio, and if the first ratio is greater than the second ratio, controlling the target vehicle to remain the current longitudinal running speed, or if the first ratio is less than or equal to the second ratio, planning a longitudinal running speed of the target vehicle based on low-speed emergency braking, the first ratio being a ratio of a lateral distance of the pedestrian target to a motion speed of the pedestrian target, and the second ratio being a ratio of a longitudinal distance of the pedestrian target to the current longitudinal running speed of the target vehicle.

4. The vehicle running control method according to claim 3, **characterized in that** the process of performing longitudinal running speed planning on the target vehicle further comprises:

if the pedestrian target is in the risky region and the pedestrian target is in the stationary state, determining whether there is a trajectory overlap between the target vehicle and the pedestrian target, and if there is no trajectory overlap between the target vehicle and the pedestrian target, controlling the target vehicle to run based on a second preset vehicle speed, or if there is the trajectory overlap between the target vehicle and the pedestrian target, controlling the longitudinal running speed of the target vehicle based on a distance between the pedestrian target and the target vehicle; or

if the pedestrian target is in the risky region and the pedestrian target is in the motion state, determining, based on the motion state of the pedestrian target, whether the pedestrian target moves longitudinally, and if the pedestrian target moves longitudinally, determining whether there is a trajectory overlap between the target vehicle and the pedestrian target, and controlling the longitudinal running speed of the target vehicle based on a trajectory overlap determining result, or if the pedestrian target moves laterally, controlling the longitudinal running speed of the target vehicle based on a distance between the pedestrian target and the target vehicle.

5. The vehicle running control method according to claim 4, **characterized in that** the process of performing longitudinal running speed planning on the target vehicle further comprises:

combining the dangerous region and the risky region of the target vehicle as an unsafe region of the target vehicle, and determining a space region other than the unsafe region in the external space region of the target vehicle as a safe region of the target vehicle;

obtaining a longitudinal running speed of the target vehicle relative to each pedestrian target in the unsafe region, denoted as an expected longitudinal running speed corresponding to each pedestrian target;

superimposing the expected longitudinal running speed corresponding to each pedestrian target, and taking a minimum to obtain a final expected longitudinal running speed corresponding to all dangerous pedestrian targets in the unsafe region as a current pedestrian target-based planned longitudinal running speed of the target vehicle, denoted as a first planned longitudinal running speed; and

combining the first planned longitudinal running speed, a third planned longitudinal running speed, and a hidden pedestrian longitudinal speed to obtain a longitudinal running speed of the target vehicle when there is the pedestrian target in the unsafe region, and determining the longitudinal running speed as a final result of running speed adjustment performed on the target vehicle, the hidden pedestrian fusion result comprising the hidden pedestrian longitudinal speed, and the third planned longitudinal running speed being obtained based on the running environment of the target vehicle.

6. The vehicle running control method according to claim 5, **characterized in that** a process of obtaining the third planned longitudinal running speed comprises:

based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum;
comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum;
obtaining, based on the target vehicle lateral distance minimum and the pedestrian target complete collision avoidance data table, a maximum longitudinal running speed of the target vehicle in a current running environment as a second planned longitudinal running speed;
calculating, based on the second planned longitudinal running speed, a parking scene danger degree coefficient, and a parking scene danger degree correction vehicle speed, a maximum vehicle speed supported by a current scene, the pre-generated parking scene danger level recognition result comprising the parking scene danger degree coefficient and the parking scene danger degree correction vehicle speed; and
comparing the maximum vehicle speed supported by the current scene with a third preset vehicle speed, and determining the larger of the maximum vehicle speed supported by the current scene and the third preset vehicle speed as the third planned longitudinal running speed.

7. The vehicle running control method according to claim 6, **characterized in that** a process of calculating the parking scene danger degree coefficient comprises:

$$W = \frac{W_t \times W_p \times W_d}{27} \times 100\%$$
,

in the formula, W indicates the parking scene danger degree coefficient, and ranges from 0 to 100%; Wt indicates danger degrees at different moments of a day; $W_p$ indicates a parking lot busy-time danger degree; and $W_d$ indicates a holiday danger degree.

8. The vehicle running control method according to claim 2, **characterized in that** a process of performing lateral running distance planning based on the dangerous pedestrian signal, the dangerous region signal, and the drivable region signal comprises:

based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum;
comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum;
calculating a difference between the first width minimum and the second width minimum, denoted as a first difference, and determining whether an absolute value of the first difference is greater than or equal to a first preset value; and
if the absolute value is less than the first preset value, determining that there is no deviation space for the target vehicle at a current moment, and skipping performing lateral running distance adjustment on the target vehicle; or
if the absolute value is greater than or equal to the first preset value, determining that there is a deviation space for the target vehicle at a current moment, and determining whether the target vehicle lateral distance minimum is less than or equal to a second preset value; and if the target vehicle lateral distance minimum is greater than the second preset value, determining that there is no deviation requirement at the current moment, and skipping performing lateral running distance adjustment on the target vehicle, or if the target vehicle lateral distance minimum is less than or equal to the second preset value, determining that there is a deviation requirement at the current moment, receiving the dangerous pedestrian signal, and determining, based on the dangerous pedestrian signal, whether there is a dangerous pedestrian target; and if there is the pedestrian target in the dangerous region or the risky region, determining that there is the dangerous pedestrian target, and skipping performing lateral running distance adjustment on the target vehicle, or if there is no pedestrian target in the dangerous region and the risky region, determining that there is no dangerous pedestrian target, and performing lateral running distance adjustment on the target vehicle.

9. The vehicle running control method according to claim 8, **characterized in that** if there is no pedestrian target in the dangerous region and the risky region, a process of performing lateral running distance adjustment on the target vehicle comprises:

   calculating a difference between the preset optimal lateral distance and the target vehicle lateral distance minimum, denoted as a second difference;
   determining whether twice of the second difference is less than or equal to the absolute value of the first difference, and if twice of the second difference is less than or equal to the absolute value of the first difference, determining the second difference as a lateral deviation distance of the target vehicle, or if twice of the second difference is greater than the absolute value of the first difference, determining a half of the absolute value of the first difference as a lateral deviation distance of the target vehicle; and
   determining whether the second difference is greater than or equal to zero, and if the second difference is greater than or equal to zero, controlling the target vehicle to deviate leftwards based on the corresponding lateral deviation distance, or if the second difference is less than zero, controlling the target vehicle to deviate rightwards based on the corresponding lateral deviation distance.

10. The vehicle running control method according to claim 2, **characterized in that** a process of performing lateral running distance planning based on the dangerous pedestrian signal, the dangerous region signal, and the drivable region signal comprises:

   based on a drivable region corresponding to the drivable region signal and the dangerous region length, reading a width minimum with an obstacle on a left side of the target vehicle in a longitudinal range of the drivable region, denoted as a first width minimum, and reading a width minimum with an obstacle on a right side of the target vehicle in the longitudinal range of the drivable region, denoted as a second width minimum;
   comparing the first width minimum, the second width minimum, and a preset optimal lateral distance, and determining the smaller of the first width minimum, the second width minimum, and the preset optimal lateral distance as a lateral distance minimum between the target vehicle and the obstacles on both sides, denoted as a target vehicle lateral distance minimum;
   determining whether the target vehicle lateral distance minimum is greater than the dangerous region width; and
   if the target vehicle lateral distance minimum is greater than the dangerous region width, determining that there is no real-time pedestrian target collision risk; or
   if the target vehicle lateral distance minimum is less than or equal to the dangerous region width, determining that there is a real-time pedestrian target collision risk.

11. A vehicle running control apparatus, **characterized in that** the apparatus comprises:

   a target fusion module, configured to perform target fusion on a sensor signal on a target vehicle to obtain pedestrian target information in an external space region of the target vehicle, the target vehicle comprising a current vehicle, and the pedestrian target information comprising a pedestrian target and pedestrian target attribute information;
   a target cognition and environmental cognition module, configured to perform target cognition and environmental cognition on the target vehicle based on a predetermined pedestrian target complete collision avoidance data table and the pedestrian target information, to obtain a dangerous pedestrian signal and a dangerous region signal;
   a hidden pedestrian fusion module, configured to perform hidden pedestrian fusion on the sensor signal on the target vehicle to obtain a hidden pedestrian fusion result;
   a drivable region fusion module, configured to perform drivable region fusion on the sensor signal on the target vehicle to obtain a drivable region signal; and

a vehicle running planning control module, configured to perform longitudinal running speed planning on the target vehicle based on a pre-generated parking scene danger level recognition result, the hidden pedestrian fusion result, the dangerous pedestrian signal, the dangerous region signal, and the drivable region signal, and/or perform lateral running distance planning on the target vehicle based on the dangerous pedestrian signal, the dangerous region signal, and the drivable region signal, to avoid contact between the target vehicle and the pedestrian target after planning.

12. A vehicle running control device, **characterized in that** the device comprises:

one or more processors; and
a storage apparatus, configured to store one or more programs, wherein when the one or more programs are executed by the one or more processors, the device is enabled to implement the vehicle running control method according to any one of claims 1 to 10.

13. A computer-readable storage medium, **characterized in that** a computer program is stored on the computer-readable storage medium; and when the computer program is executed by a processor of a computer, the computer is enabled to perform the vehicle running control method according to any one of claims 1 to 10.

Fig. 1

Fig. 2

Fig. 3

**Target cognition + environmental cognition**

Fig. 4

Longitudinal running speed planning

Fig. 5

## Lateral running distance planning

Fig. 6

Fig. 7

Europäisches
Patentamt

European
Patent Office

Office européen
des brevets

**EUROPEAN SEARCH REPORT**

Application Number

EP 23 21 3254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/031737 A1 (KIM YOON SOO [KR] ET AL) 4 February 2021 (2021-02-04) | 1,11-13 | INV. B60W30/06 |
| A | * paragraphs [0073] - [0074], [0119] - [0123], [0153] * | 2-10 | B60W30/08 B60W30/09 B60W60/00 |
| A | US 2017/032678 A1 (SIM SANG KYUN [KR]) 2 February 2017 (2017-02-02) * paragraphs [0041] - [0044], [0062] - [0063]; figure 7 * | 1,11 | B62D15/02 G08G1/16 |
| A | SEONG KYUNG KWON: "Detection scheme for a partially occluded pedestrian based on occluded depth in lidar-radar sensor fusion", OPTICAL ENGINEERING, vol. 56, no. 11, 28 November 2017 (2017-11-28), page 1, XP093160398, 1000 20th St. Bellingham WA 98225-6705 USA ISSN: 0091-3286, DOI: 10.1117/1.OE.56.11.113112 * paragraph [0003] * | 1,11 | |

TECHNICAL FIELDS SEARCHED (IPC)

B62D
G08G
B60W

The present search report has been drawn up for all claims

| Place of search | Date of completion of the search | Examiner |
|---|---|---|
| The Hague | 8 May 2024 | Areal Calama, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 21 3254**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-05-2024**

| Patent document cited in search report | Publication date | Patent family member(s) | | Publication date |
|---|---|---|---|---|
| US 2021031737 A1 | 04-02-2021 | CN | 108263279 A | 10-07-2018 |
| | | EP | 3342661 A1 | 04-07-2018 |
| | | KR | 20180078983 A | 10-07-2018 |
| | | US | 2018236985 A1 | 23-08-2018 |
| | | US | 2021031737 A1 | 04-02-2021 |
| US 2017032678 A1 | 02-02-2017 | CN | 106394552 A | 15-02-2017 |
| | | DE | 102016213490 A1 | 02-02-2017 |
| | | KR | 20170014159 A | 08-02-2017 |
| | | US | 2017032678 A1 | 02-02-2017 |

EPO FORM P0459

For more details about this annex : see Official Journal of the European Patent Office, No. 12/82